Europäisches Patentamt

European Patent Office

Office européen des brevets

(11) Veröffentlichungsnummer: **0 236 670**
**A1**

(12) **EUROPÄISCHE PATENTANMELDUNG**

(21) Anmeldenummer: 87100135.0

(22) Anmeldetag: 08.01.87

(51) Int. Cl.4: **H01S 3/091** , H01S 3/04

(30) Priorität: **13.03.86 DE 8606977 U**

(43) Veröffentlichungstag der Anmeldung:
**16.09.87 Patentblatt 87/38**

(84) Benannte Vertragsstaaten:
**AT BE CH DE FR GB IT LI NL SE**

(71) Anmelder: **Rofin-Sinar Laser GmbH**
**Berzeliusstrasse 87**
**D-2000 Hamburg 74(DE)**

(72) Erfinder: **Martinen, Hinrich, Dipl.-Phys.**
**Lindenstrasse 6**
**D-2085 Quickborn(DE)**
Erfinder: **Simonsson, Samuel, Dipl.-Ing.**
**Luhering 23**
**D-2090 Winsen/Bahlburg(DE)**
Erfinder: **Wirth, Peter, Dr., Dipl.-Phys.**
**Birkengrund 1**
**D-2090 Winsen/Luhdorf(DE)**

(74) Vertreter: **Glawe, Delfs, Moll & Partner**
**Patentanwälte**
**Postfach 26 01 62 Liebherrstrasse 20**
**D-8000 München 26(DE)**

(54) **Festkörperlaseranordnung.**

(57) Die Festkörperlaseranordnung mit einem Laserelement (1) und einer Anregungslichtquelle für das Lasermedium, die ein geschlossenes, mit einem Gas (6) gefülltes Gefäß (2, 3, 19) mit strahlungsdurchlässigen Wänden und außerhalb des vom Gas (6) eingenommenen Raumes angebrachten Elektroden (4) für Anregung einer Hochfrequenzentladung im Gas (6) aufweist, zeichnet sich dadurch aus, daß das Gefäß (2, 3, 19) der Anregungslichtquelle das Laserelement (1) umschließt.

F i g.2

EP 0 236 670 A1

# Festkörperlaseranordnung

Die Erfindung betrifft eine Festkörperlaseranordnung mit einem Laserelement und einer Anregungslichtquelle für das Lasermedium, die ein geschlossenes, mit einem Gas gefülltes Gefäß mit strahlungsdurchlässigen Wänden und außerhalb des vom Gas eingenommenen Raumes angebrachten Elektroden für Anregung einer Hochfrequenzentladung im Gas aufweist.

Es ist bekannt, Festkörperlaserelemente mit Hilfe von Licht von Entladungslampen anzuregen oder zu "pumpen". Die bekannten Entladungslampen, die entweder im Dauerstrich oder impulsmäßig betrieben werden können, haben aber verschiedene Nachteile. Einmal ist ihre Lebensdauer wegen Abbrandes der Elektroden begrenzt. Im Bereich der Elektroden hat man eine problematische Metall-Glas-Verbindung, die undicht werden kann. Will man des Emissionsspektrum der Entladungslampen an das Pumpspektrum des Festkörperlasers durch entsprechende Gasbeimengungen zum Gas der Entladungslampe anpassen, so ist man auf nichtagressive Gasbeimengungen beschränkt, da sonst die Elektroden angegriffen werden und noch schneller abgenutzt bzw zerstört werden, als dies ohnehin der Fall ist.

Alle diese Nachteile bestehen nicht, wenn man eine Hochfrequenzentladung verwendet, bei der das Gas in einem geschlossenen Gefäß mit Wänden aus inertem optisch durchlässigem Material eingeschlossen ist, wobei die Elektroden außerhalb des Gefäßes angeordnet sind und die Entladung durch kapazitive Einkopplung von Hochfrequenzenergie in das Gas bewirkt wird. Solche Hochfrequenzentladungen haben auch den Vorteil, daß sich die Emissionslinien nicht zu kürzeren Wellenlängen verschieben können, was bei gewöhnlichen Entladungslampen bei höheren Strömen in störender Weise auftritt. Man kommt mit geringerer Stromstärke aus, es ist eine raschere Steuerung auch in einem geschlossenen Regelkreis möglich. Schließlich erhält man bei der Hochfrequenzentladung auch Anteile eine kontinuierlichen Bremsspektrums, also nicht nur ein Linienspektrum wie bisher. Weiter kann man, da das Gas ganz von inerten Wänden umschlossen ist, dem Gas auch Anteile agressiver Materialien beimischen, um das Emissionsspektrum dem Pumpspektrum des Festkörperlasers anzupassen.

Die Aufgabe der Erfindung besteht nun darin, eine Festkörperlaseranordnung der eingangs genannten Art zu schaffen, bei der die Vorteile der Hochfrequenzentladung wirksam ausgenutzt werden können.

Die erfindungsgemäße Lösung besteht darin, daß das Gefäß der Anregungslichtquelle das Laserelement umschließt.

Es ist erfindungsgemäß möglich, durch entsprechende Anordnung von Elektroden eine solche Hochfrequenzentladung auch in einem den Laser umschließenden Gefäß zu erhalten, mit dem der Festkörperlaser wirksam gepumpt werden kann. Dadurch, daß das Gefäß das Laserelement umschließt, kann von allen Seiten Pumplicht in das Laserelement eindringen.

Wenn das Gefäß der Anregungslichtquelle das Laserelement vollständig bis auf die Stellen umschließt, an denen die Resonatorspiegel vorgesehen sind, so kann einerseits besonders viel und wirksam Pumplicht in das Laserelement eindringen, während andererseits das Austreten des Laserlichtes und die Justierung der Resonatorspiegel nicht behindert ist.

Wenn man die Elektroden auf der äußeren Oberfläche des Gefäßes der Anregungslichtquelle anordnet, so kann das Licht ungehindert aus dem Gefäß in das Laserelement eintreten, ohne daß die Elektroden den Lichtweg behindern. Dies soll aber nicht die Möglichkeit ausschließen, auf der Innenseite des Gefäßes, also zwischen Gefäß und Laserelement Elektroden vorzusehen, die zwar metallisch leiten, trotzdem aber für das Pumplicht durchlässig sind.

Sind die Elektroden direkt auf dem Gefäß befestigt und auf der zum Gefäß gerichteten Seite verspiegelt, so erhält man einerseits eine besonders wirksame Hochfrequenzentladung, andererseits aber eine besonders wirksame zusätzliche Reflektion des nicht direkt nach innen gelangenden Lichtes der Hochfrequenzentladung, nämlich des nach außen gestrahlten Lichts derselben, wobei dann das letztgenannte Licht auch auf das Laserelement reflektiert wird.

Bei der Hochfrequenzentladung kann möglicherweise beträchtliche Wärme freiwerden; solche Wärme wird auch vom Laserelement abgegeben. Es kann zweckmäßigerweise vorgesehen werden, um diese Wärme abzuführen, daß zwischen Laserelement und innerer Gefäßwand ein Raum für ein Kühlmittel vorgesehen ist. Dieses Kühlmittel kann insbesondere eine Flüssigkeit sein, die dann aber für die Pumpwellenlängen transparent sein muß. Ebenso wie die Wände des Gefäßes für die Anregungslichtquelle sollte die Kühlflüssigkeit dann auch kleine Tangens-Delta-Werte haben.

Für noch bessere Kühlung wird das Gefäß für die Anregungslichtquelle zweckmäßigerweise in einem mit Kühlmittel gefüllten Behälter angeordnet, so daß die Hochfrequenzentladung auch von außen gekühlt wird. Das Kühlmittel kann dabei dasselbe sein wie zwischen Laserelement und Gefäß; diese Kühlmittel können dabei durch entsprechende Pumpen in Zirkulation gebracht und gehalten werden.

Ist das Laserelement zylinderförmig, so ist zweckmäßigerweise das Gefäß für die Anregungslichtquelle ein Hohlzylinder. Ist andererseits das Laserelement plattenförmig (Laserelemente mit Totalreflektion), so ist das Gefäß für die Anregungslichtquelle zweckmäßigerweise rechteckig, um es so möglichst gut der Form des Laserelementes anzupassen.

Wenn das Gefäß für die Anregungslichtquelle mit einem Wärmetauscher verbunden ist, so besteht eine zusätzliche Möglichkeit der Kühlung des Gases, das für die Anregungslichtquelle benutzt wird. Dabei kann mehr Wärme abgeführt werden, als dies möglicherweise wegen beengter Geometrie in unmittelbarer Nähe des Laserelementes möglich ist.

Vorteilhafterweise ist das Gefäß für die Anregungslichtquelle dabei mit dem Wärmetauscher über Rohrleitungen verbunden, wobei auch eine besondere Pumpe vorgesehen sein kann.

Es wird sich nicht in allen Fällen vermeiden lassen, daß die Qualität des Gases der Anregungslichtquelle mit der Zeit ab nimmt. Dies wird insbesondere dann möglicherweise der Fall sein, wenn ein separater Kühlkreislauf verwendet wird. So könnten zum Beispiel durch die Verwendung der Pumpe für den Kühlkreislauf für das Gas der Anregungslichtquelle Probleme auftreten.

Zweckmäßigerweise wird daher vorgesehen, daß das Gefäß für die Anregungslichtquelle, die Rohrleitungen oder der Wärmetauscher mit Anschlüssen zum Austausch von Gas versehen sind. Insbesondere bei einem geschlossenen Kreislauf des Gases kann so immer ein wenig altes Gas abgezapft und entsprechend viel neues Gas hinzugeführt werden, so daß das Gas der Anregungslichtquelle auch über längere Zeiten immer die gewünschten Eigenschaften behält.

Die Erfindung wird im folgenden beispielsweise unter Bezugnahme auf die beigefügten Zeichnungen beschrieben. Es zeigen:

Fig. 1    eine Laseranordnung mit einem zylinderförmigen Laserelement im Schnitt, und

Fig. 2    in einem Längsschnitt eine andere Ausführungsform der erfindungsgemäßen Laseranordnung.

Das zylinderförmige Laserelement 1 in Form eines Festkörperlaserelementes zum Beispiel aus Rubin wird von einem Gefäß umschlossen, das zwei konzentrische Wände 2 und 3 aufweist, die an ihren Stirnseiten mit Wänden zu einem Gefäß verschlosssen sind. Auf der äußeren Oberfläche der äußeren Wand 3 sind Elektroden 4 angebracht, die durch nicht gezeigte Leitungen mit einer nicht gezeigten Hochfrequenzquelle verbunden sind. Die gesamte Anordnung befindet sich in einem zylinderförmigen Gefäß mit einer Wandung 5.

Innerhalb des Gefäßes zwischen den Wänden 2 und 3 befindet sich das Gas 6, in dem die Hochfrequenzentladung bewirkt werden soll. Zwischen dem Laserelement 1 und der inneren Wandung 2 des Gefäßes befindet sich Kühlflüssigkeit 7; solche Kühlflüssigkeit 7 befindet sich auch zwischen der äußeren Gefäßwandung 3 und der Behälterwandung 5. Um wirksam nach außen gerichtetes Licht der Hochfrequenzstrahlung nach innen zum Laserelement 1 zu richten, sind die Elektroden 4 auf der zum Gefäß zeigenden Seite verspiegelt (bei 8).

Es versteht sich, daß die Zahl und Anordnung der Elektroden abgewandelt werden kann. Das gleiche für die Form von Laserelement und Gefäß für die Anregungslichtquelle sowie umgebenden Behälter. Ist das Laserelement quaderförmig, so werden auch die Wände 2, 3 sowie die äußere Behälterwandung 5 im wesentlichen rechteckige Symmetrie haben.

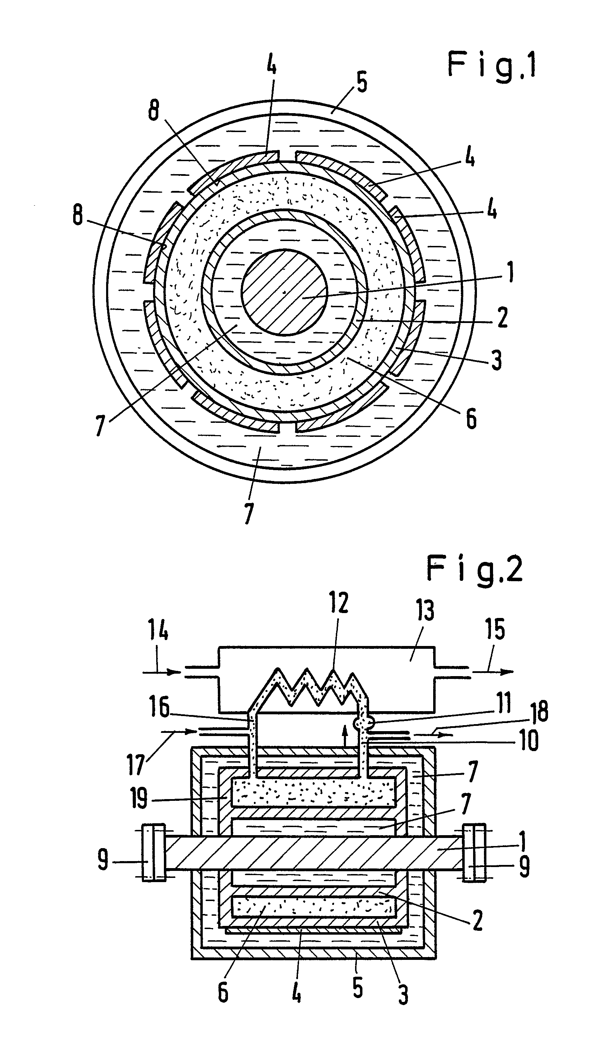

Bei der in Figur 2 gezeigten Anordnung sind die Resonatorspiegel 9 außerhalb des Kühlgefäßes 5 angeordnet; selbstverständlich könnten sie auch innerhalb des Kühlgefäßes angeordnet sein, so daß das gesamte Laserelement 1 vom Kühlgefäß umschlossen wird.

Das von den Wänden 2, 3 und 19 begrenzte Gefäß für die Anregungslichtquelle ist im oberen Teil über eine Rohrleitung 10 und eine Pumpe 11 mit einer Kühlschlange 12 verbunden, die sich in einem Wärmeaustauscherbehälter 13 befindet, durch den in Richtung der Pfeile 14, 15 ein Kühlmedium hindurchgeleitet werden kann, um so das Gas zu kühlen. Anschließend wird das Gas dann über eine Rohrleitung 16 wieder in das Gefäß 2, 3, 19 zurückgeleitet. Auf diese Weise besteht die Möglichkeit, das Gas für die Anregungslichtquelle extern weiterzukühlen. Selbstverständlich ist die Anordnung der Rohrleitungen 10, 16 in der Figur nur schematisch zu verstehen; normalerweise wird man, um eine Spülung für das Gefäß für die Anregungslichtquelle zu erreichen, Einlaß und Auslaß für den Kühlkreislauf möglichst weit entfernt voneinander anordnen.

Die Rohrleitungen 10, 16 sind noch mit kleinen Einlässen und Auslässen versehen, durch die in Richtung des Pfeiles 17 frisches Gas nachgefüllt und in Richtung des Pfeiles 18 verbrauchtes Gas abgezogen werden kann, um so einen kleinen Teilstrom des Gases bei Bedarf oder kontinuierlich zu erneuern, falls sich die Qualität des Gases der Anregungslichtquelle im Gefäß 2, 3, 19 und dem Wärmetauscherkreislauf verschlechtern sollte.

## Ansprüche

1. Festkörperlaseranordnung mit einem Laserelement (1) und einer Anregungslichtquelle für das Lasermedium, die ein geschlossenes, mit einem Gas (6) gefülltes Gefäß (2, 3, 19) mit strahlungsdurchlässigen Wänden und außerhalb des vom Gas (6) eingenommenen Raumes angebrachten Elektroden (4) für Anregung einer Hochfrequenzentladung im Gas (6) aufweist, dadurch gekennzeichnet, daß das Gefäß (2, 3, 19) der Anregungslichtquelle das Laserelement (1) umschließt.

2. Festkörperlaseranordnung nach Anspruch 1, dadurch gekennzeichnet, daß das Gefäß (2,3,19) der Anregungslichtquelle das Laserelement (1) vollständig bis auf die Stellen umschließt, an denen die Resonatorspiegel (9) vorgesehen sind.

3. Festkörperlaseranordnung nach Anspruch 1 oder 2, dadurch gekennzeichnet, daß die Elektroden (4) auf der äußeren Oberfläche des Gefäßes (2,3,19) der Anregungslichtquelle angeordnet sind

4. Festkörperlaseranordnung nach einem der Ansprüche 1 bis 3, dadurch gekennzeichnet, daß die Elektroden (4) direkt auf dem Gefäß (2,3,19) befestigt und auf der zum Gefäß gerichteten Seite verspiegelt (bei 8) sind.

5. Festkörperlaseranordnung nach einem der Ansprüche 1 bis 4, dadurch gekennzeichnet, daß zwischen Laserelement (1) und innerer Gefäßwand (2) ein Raum für ein Kühlmittel (7) vorgesehen ist.

6. Festkörperlaseranordnung nach einem der Ansprüche 1 bis 5, dadurch gekennzeichnet, daß das Gefäß (2,3,19) in einem mit Kühlmittel (7) gefüllten Behälter (5) angeordnet ist.

7. Festkörperlaseranordnung nach einem der Ansprüche 1 bis 6, dadurch gekennzeichnet, daß das Gefäß (2,3,19) für die Anregungslichtquelle ein Hohlzylinder ist.

8. Festkörperlaseranordnung nach einem der Ansprüche 1 bis 6, dadurch gekennzeichnet, daß das Gefäß (2,3,19) rechteckig ist.

9. Festkörperlaseranordnung nach einem der Ansprüche 1 bis 8, dadurch gekennzeichnet, daß das Gefäß (2,3,19) für die Anregungslichtquelle mit einem Wärmetauscher (12,13) verbunden ist.

10. Festkörperlaseranordnung nach Anspruch 9, dadurch gekennzeichnet, daß das Gefäß (2,3,19) für die Anregungslichtquelle mit dem Wärmetauscher (12,13) über Rohrleitungen (10,16) verbunden ist.

11. Festkörperlaseranordnung nach Anspruch 9, dadurch gekennzeichnet, daß das Gefäß (2,3,19) für die Anregungslichtquelle mit dem Wärmetauscher (12,13) über Rohrleitungen (10,16) und eine Pumpe (11) verbunden ist.

12. Festkörperlaseranordnung nach einem der Ansprüche 1 bis 11, dadurch gekennzeichnet, daß das Gefäß (2,3,19), die Rohrleitungen (10,16) oder der Wärmetauscher (12,13) mit Anschlüssen zum Austausch von Gas für die Anregungslichtquelle (bei 17,18) versehen sind.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 265 989 (KARL GÜRS) <br><br> * Figur; Spalte 1, Zeilen 30-42; Spalte 2, Zeilen 43-68; Spalte 3, Zeilen 10-48 * <br><br> --- | 1,2,5-7,12 | H 01 S 3/091 <br> H 01 S 3/04 |
| A | IEEE JOURNAL OF QUANTUM ELECTRONICS, Band QE-12, Nr. 1, Januar 1976, Seiten 1-9, New York, US; D.A. HUCHITAL et al.: "Pumping of Nd: YAG with electrodeless arc lamps" <br> * Abschnitt B. "Electrodeless excitation of arc lamps" * <br><br> ----- | 1 | |

| | RECHERCHIERTE SACHGEBIETE (Int. Cl.4) |
|---|---|
| | H 01 S |

Der vorliegende Recherchenbericht wurde für alle Patentansprüche erstellt.

| Recherchenort <br> DEN HAAG | Abschlußdatum der Recherche <br> 16-06-1987 | Prüfer <br> CONRAD V.HEYDENDORFF |
|---|---|---|